# EUROPÄISCHE PATENTSCHRIFT

(11) **EP 3 094 939 B1**
(45) Veröffentlichungstag und Bekanntmachung des Hinweises auf die Patenterteilung: **02.03.2022**
(21) Anmeldenummer: 15706925.3
(22) Anmeldetag: 14.01.2015
(51) Int. Cl.: F28D 20/00

(54) **VORRICHTUNG MIT EINEM BEHÄLTER ZUM SPEICHERN EINER FLÜSSIGKEIT**
DEVICE COMPRISING A RECEPTACLE FOR STORING A LIQUID
DISPOSITIF DOTÉ D'UN CONTENANT SERVANT À STOCKER UN LIQUIDE

(30) Priorität: 14.01.2014 DE 102014000191
(43) Veröffentlichungstag der Anmeldung: 23.11.2016
(73) Patentinhaber: Franck, Jan, 95466 Weidenberg (DE)
(72) Erfinder: Franck, Jan, 95466 Weidenberg (DE)
(74) Vertreter: Küchler, Stefan
(86) Internationale Anmeldenummer: PCT/IB2015/000021
(87) Internationale Veröffentlichungsnummer: WO 2015/107410

(56) Entgegenhaltungen:
- DE-A1- 19 710 803
- DE-U1- 9 200 824
- DE-U1-202007 002 525
- US-A- 5 030 033
- US-A1- 2010 037 888

## Beschreibung

Die Erfindung richtet sich auf eine Vorrichtung mit einem Behälter zum Speichern einer Flüssigkeit. DE 20 2007 002525 U1 offenbart eine Vorrichtung gemäss dem Oberbegriff des Patentanspruchs 1.

Häufig soll eine Flüssigkeit auf einer von dem äußeren Temperaturniveau abweichenden Temperatur gehalten und gespeichert werden. Hierzu ist es bekannt, Behälter an ihrer Außenseite mit einem Isolationsmaterial zu belegen, welche den Behälter mitsamt der darin enthaltenen Flüssigkeit von dem Außenraum - beispielseweise einem Kellerraum - thermisch isoliert. Allerdings sind solche Behälter zumeist relativ teuer, u.a. auch deshalb, weil die Behälter-Außenseite oftmals gekrümmt ist, beispielsweise entlang von Zylinder- oder Kalottenflächen, so dass die Isolation hinsichtlich ihrer Gestalt daran angepasst werden muss.

Aus diesen Nachteilen des vorbekannten Standes der Technik resultiert das die Erfindung initiierende Problem, für einen Behälter zum Speichern einer Flüssigkeit die Anordnung derart zu treffen, dass dieser trotz einer guten thermischen Isolation möglichst preiswert herstellbar ist.

Zur Lösung dieses Problems sieht die Erfindung bei einem gattungsgemäßen Behälter zum Speichern einer Flüssigkeit vor, dass der Behälter unmittelbar an seiner Außenseite keine Isolation aufweist, sondern in einer begehbaren Kammer aufgestellt ist, die an ihrer Innenseite mit einer plattenförmigen, thermischen Isolation belegt ist. Die Erfindung hat die Merkmale des Anspruchs 1.

Dadurch können unabhängig von der Art und Form des Behälters ebene Platten aus einem thermisch isolierenden Material oder mit einem thermisch isolierenden Aufbau verwendet werden. Gemäss der Erfindung ist die Kammer so groß gewählt, dass sie auch bei eingebautem Behälter noch begehbar ist, also genügend Platz für eine Person aufweist. Die Innenwand einer Kammer oder eines Raums kann unabhängig von der Gestalt eines darin aufgestellten Flüssigkeitsbehälters stets mit ebenen Wänden, Decken und Boden versehen sein, woran sich mühelos ebene Platten befestigen lassen, beispielsweise mittels Kleber. Gemäss der Erfindung sind alle Innenwände der den Behälter aufnehmenden Kammer sowie deren Decke und deren Boden isoliert, d.h. mit isolierenden Platten belegt.

Als Isolationsmaterial kommen bevorzugt geschäumte Materialien wie geschäumtes Polystyrol bzw. Poly(1-phenylethan-1,2-diyl) in Betracht, beispielsweise in expandierter Form (EPS) wie Styropor, oder in extrudierter Form (XPS) wie Styrodur, ersteres bevorzugt an Wänden und/oder an der Decke, letzteres bevorzugt am Boden. Außerdem können auch sogenannte Vakuumisolationskörper verwendet werden, wobei der eigentliche loslationskörper vollständig von einer luftdichten Hülle umgeben und evakuiert ist, so dass die Wärmeleitfähigkeit auf ein Minimum reduziert ist. Natürlich sind auch andere Substanzen denkbar, wenn diese ein ausreichendes Wärmeisolationsvermögen aufweisen.

Bevorzugt ist die begehbare Kammer mit einem Gas gefüllt, beispielsweise mit Luft.

Es wird empfohlen, dass der Druck innerhalb der Kammer dem atmosphärischen Druck entspricht.

Die Kammer ist vorzugsweise mit einem Zugang versehen, beispielsweise in Form einer Tür, eines Deckels und/oder eines Mannlochs. Der Zugang kann in geschlossenem Zustand luftdicht abgedichtet sein, um einen konvektionsbedingten Wärmetransport auszuschließen.

Bei der gespeicherten Flüssigkeit kann es sich um Wasser handeln, beispielsweise um warmes Wasser im Rahmen einer Heizung oder als Verbrauchswasser für Küche, Bad und/oder WC. Auch eine gekühlte Flüssigkeit wie beispielsweie kaltes Wasser, welches im Sommer angenehm temperiert ist, lässt sich in einem solchen Behälter aufbewahren.

Besonders eignet sich die Erfindung zur Speicherung von Flüssigkeiten, welche Wasser als Hauptbestandteil enthalten, d.h., in einem Gewichtsanteil von 50 % oder mehr, beispielsweise in einem Gewichtsanteil von 70 % oder mehr, bevorzugt in einem Gewichtsanteil von 90 % oder mehr, vorzugsweise in einem Gewichtsanteil von 95 % oder mehr, insbesondere in einem Gewichtsanteil von 98 % oder mehr, oder gar in einem Gewichtsanteil von 99 % oder mehr. Dies betrifft u.a. mit besonderen Chemikalien versetzte Flüssigkeiten, beispielsweise mit einem Frostschutzmittel, Rostschutzmitteln, Antiocisantien und/oder Substanzen zur Beeinflussung sonstiger Parameter wie Viskosität, Säuregrad, Siedepunkt, etc.

Bei Beadarf können grundsätzlich auch verschiedene andere Flüssigkeiten in einem erfindungsgemäßen Behälter gespeichert werden, beispielsweise Öle, Säuren, Laugen od. dgl., insbesondere wenn eine Temperierung derselben gewünscht wird.

Es liegt im Rahmen der Erfindung, dass der Druck innerhalb des Behälters dem atmosphärischen Druck entspricht oder größer ist als jener. Da der erfindungsgemäße Behälter manuell oder automatisch auf Leckagen überprüfbar ist, so kann dieser ohne Gefahr für das Grundwasser und ohne sonstige Beeinträchtigung der Umwelt mit einem inneren Überdruck betrieben werden.

Die erfindungsgemäße Kammer kann unterirdisch angeordnet sein, beispielsweise in Form eines Kellerraums oder eines vollständig abgeschlossenen Kellerabteils, oder eines zisternenartigen Hohlraums unter der Erde. Durch Versenkung der Kammer im Erdreich, insbesondere unterhalb der Frostgrenze bei ca. 80 cm oder 100 cm, kann erreicht werden, dass in der kalten Jahreszeit der Temperaturabfluss dank einer verringerten Temperatudifferenz gegenüber der Umgebung vermindert ist. Eine vergleichbare Wirkung hat der Einbau in einen Kellerraum, insbesondere wenn derselbe überwiegend oder vollständig unterhalb der Erdoberfläche liegt.

Andererseits ist es auch möglich, dass die Kammer oberirdisch angeordnet ist, beispielsweise in Form eines (Neben-) Gebäudes oder einer Vorrats- oder Abstellkammer, vorzugsweise auf dem Erdboden, ggf. aber auch auf einem Dachboden od. dgl.

Durch einen Einbau in ein an seiner Außenseite zusätzlich isoliertes Gebäude kann die Isolationswirkung der Wärmedämmung an der Innenseite der Kammer weiter verbessert werden.

In der Kammer kann eine Leiter vorgesehen wein, damit eine Person in die Kammer hinabsteigen kann. Zwar könnten zu diesem Zweck auch einzelne Sprossen jeweils an der Kammer-Außenwand angeordnet sein; eine solche Maßnahme würde jedoch zu einer Vielzahl von Wärmebrücken führen, weil bei jeder derartigen Sprosse die Isolation unterbrochen werden müsste. Besser ist es daher, eine Leiter mit Holmen zu verwenden und diese allenfalls an dem oberen und/oder unteren Ende an der Kammer zu verankern. Andererseits besteht auch die Möglichkeit, eine solche Leiter oer einzelne Sprossen an dem Behälter selbst anzuordnen, weil dadurch keine Wärmebrücken nach außen entstehen.

Die Kammer sollte mit einer künstlichen und/oder natürlichen Beleuchtung versehen sein, beispielsweise mit einer elektrischen Beleuchtung und/oder mit einem Lichtschacht. Aus Sicherheitsgründen kann ein Lichtschalter für eine kammerseitige, künstliche Beleuchtung außerhalb der Kammer angeordnet sein, damit beim Ein- und Ausschalten keine Funkenbildung in der Kammer auftritt.

Sofern eine natürliche Beleuchtung gewünscht ist, kann bei einer oberirdischen Kammer wenigstens ein Teil der Kammer verglast sein. Dabei wird dann allerdings Thermo-Glas empfohlen, also eine mehrlagige Anordnung von Glasscheiben mit jeweils Vakuum zwischen den einzelnen Scheiben. Bei einer unterirdischen Kammer wäre ggf. ein Lichtschacht in der Lage, Tageslicht ins Innere der Kammer zu lassen.

Die Erfindung zeichnet sich weiterhin aus durch eine Heizeinrichtung, um die Temperatur der gespeicherten Flüssigkeit anzuheben, und/oder durch eine Kühleinrichtung, um die Temperatur der gespeicherten Flüssigkeit abzusenken. Dabei genügt es, im Bereich des Behälters oder der Kammer einen Wärmetauscher anzuordnen; die eigentliche Wärmeerzeugung oder -gewinnung kann außerhalb stattfinden.

Die Heiz- und/oder Kühleinrichtung oder jedenfalls ein Wärmetauscher derselben sollte innerhalb der begehbaren Kammer angeordnet sein, derart, dass sie (er) von der an der Innenseite der Kammerwand angeordneten, plattenförmigen, thermischen Isolation umschlossen ist. Somit kann die eingebrachte Wärme nicht nach außen entweichen bzw. eine zu Kühlzwecken abgeführte Wärme nicht mehr in die Kammer eindringen.

Bevorzugt ist wenigstens ein innerhalb der Kammer und/oder des Behälters angeordneter Wärmetauscher einer Heiz- und/oder Kühleinrichtung Bestandteil eines Wärmepumpen- oder eines sonstigen Wärmekreislaufs, beispielsweie eines Solarkollektor-Wärmekreislaufs, um je nach Bedarf Wärme in die Kammer oder in den Behälter zu transportieren oder von dort abzuführen. Der jeweils andere Wärmetauscher eines Wärmekreislaufs ist dabei außerhalb der Kammer oder jedenfalls außerhalb des erfindungsgemäßen Behälters angeordnet.

Die Erfindung lässt sich dahingehend weiterbilden, dass wenigstens eine Heiz- und/oder Kühleinrichtung Bestandteil eines Temperaturregelkreises ist, um die Temperatur der Flüssigkeit innerhalb des Behälters auf einen vorgegebenen Temperaturwert zu regeln oder innerhalb eines vorgegebenen Bereichs zulässiger Temperaturwerte zu halten. Durch eine solche Maßnahme kann sichergestellt werden, dass die Temperatur der Flüssgkeit innerhalb des Behälters stets zulässigen Werten entspricht, beispielsweise auch dann, wenn eine nachzufüllende Flüssigkeitsmenge ursprünglich eine andere Temperatur aufweist als die gespeicherte Flüssigkeitsmenge.

Andererseits kann wenigstens eine Heiz- und/oder Kühleinrichtung Bestandteil eines Temperaturregelkreises sein, um die Tempertur der Luft innerhalb der Kammer auf einen vorgegebenen Temperaturwert zu regeln oder innerhalb eines vorgegebenen Temperaturwertebereichs zu halten. Wenn die Temperatur innerhalb des thermisch isolierten Bereichs der Kammer auf dem selben Niveau gehalten wird wie die Soll-Temperatur der Flüssigkeit innerhalb des darin aufgestellten Behälters, ist der Wärmeabfluss von der entsprechend temperierten Flüssigkeit durch die Wand des Behälters hindurch gleich null. Zum Zwecke einer Temperaturüberwachung und/oder -regelung sollte in dem begehbaren Raum der Kammer außerhalb des Behälters ein Temperatursensor angeordnet sein. Damit könnte beispielsweise im Falle einer Überhitzung im Winter oder einer zu tiefen Temperatur in der warmen Jahreszeit ein Ventilator aktiviert werden, um die Luft innerhalb der Kammer auszutauschen.

Ferner lässt sich in dem begehbaren Raum der Kammer außerhalb des Behälters ein Leckagesensor anordnen, beispielsweise ein die innerhalb des Behälters gespeicherte Flüssigkeit detektierender Sensor. Ein bevorzugter Ort für einen solchen Sensor wäre bspw. in einem bodenseitigen "Sumpf" der Kammer, also dort, wo sich austretende Flüssigkeit sammeln würde. Zu diesem Zweck könnte der Boden eventuell zu einer Ecke hin geneigt verlaufen, wo sich dann der betreffende Flüssigkeitssensor befindet.

Schließlich entspricht es der Lehre der Erfindung, dass in dem begehbaren Raum der Kammer außerhalb des Behälters ein Drucksensor angeordnet ist. Damit könnte insbesondere bei einem Druckbehälter und bei abgedichtetem Zugang eine Undichtheit des Behälters erkannt werden.

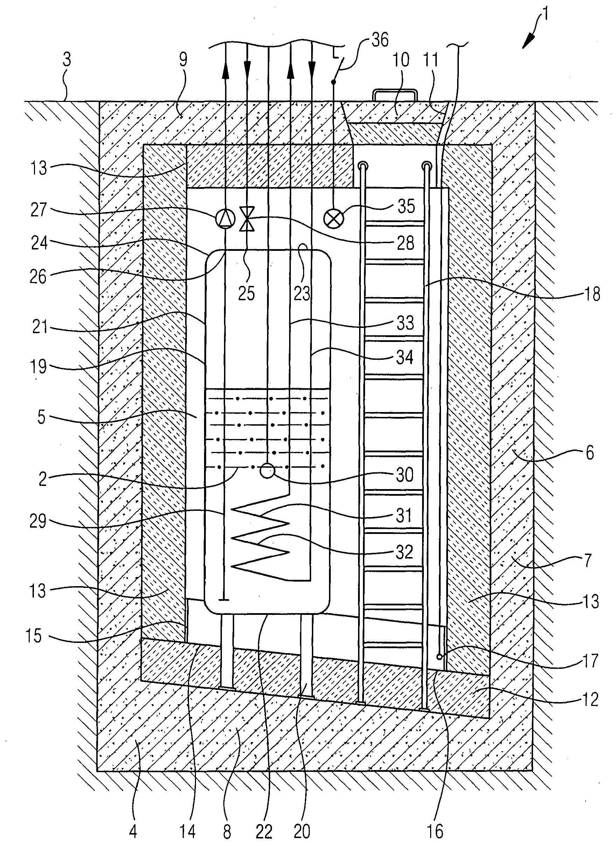

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Deren einzige Figur zeigt einen Vertikalschnitt durch eine erfindungsgemäße Vorrichtung zur Speicherung einer zu temperierenden Flüssigkeit.

Die in der Zeichnung beispielhaft dargestellte Vorrichtung 1 zur Speicherung einer zu temperierenden Flüssigkeit 2 befindet sich unterhalb der Erdoberfläche 3. Dies ist allerdings nicht zwingend. Die gesamte Anordnung könnte sich - bis auf ein Fundament 4 oder einen sonstigen Unterbau - auch oberhalb der Erdoberfläche 2 befinden.

Ein markantes Charakteristikum der erfindungsgemäßen Vorrichtung 1 ist eine Kammer 5, die durch eine Umhausung 6 umgrenzt ist.

Diese Umhausung 6 besteht bevorzugt aus Wänden 7, einem Boden 8 und einer Decke 9. Wände 7, Boden 8 und Decke 9 sind bevorzugt zumindest selbsttragend. Hierfür kommen vielfältige Materialien mit ausreichender Stabilität in Betracht. Bevorzugt werden jedoch Baumaterialien wie (Ziegel-) Steine oder Beton; natürlich sind grundsätzlich auch andere Materialien denkbar wie Kunststoff, Metall oder gar Holz, wenngleich solche Materialien bei der Stabilität und/oder Dauerhaftigkeit den anorganischen, nichtmetallischen Baumaterialien im Allgemeinen unterlegen sind.

Der Boden 8 der Umhausung 6 bzw. die Oberseite des Fundaments 4 kann an seiner (ihrer) Innenseite leicht schräg verlaufen, um an seiner (ihrer) tiefsten Stelle eine Art Sumpf für auslaufende Flüssigkeit 2 od. dgl. zu bilden.

Oberhalb der höchsten Stelle eines ggf. schräg verlaufenden Bodens 8 hat die Kammer 5 einen bis unter die Decke 9 einen konstanten bzw. gleichbleibenden horizontalen Querschnitt. Bevorzugt hat dieser horizontale Querschnitt eine mehreckige Gestalt mit geraden Seiten, beispielsweise einen rechteckigen oder quadratischen Umfang.

Grundsätzlich ist natürlich auch eine kreisförmige Geomtrie denkbar, wenngleich dies der weiteren Montage nicht förderlich ist.

Die Wände 7 können aus mehreren, übereinandergesetzten, ringförmigen Bauteilen mit jeweils mehreckigem Umfang entsprechend dem gleichbleibenden Querschnitt der Kammer 5 bestehen; solche ringförmigen Bauteile können jeweils aus Beton bestehen und an ihren ebenen Ober- und Unterseiten mit rundum laufenden, zueinander komplementären Vertiefung und/oder Erhebung versehen sein, welche für eine gegenseitige Zentrierung sorgen.

Andererseits ist es auch denkbar, zumindest Teile der Wände 7 aus vertikal aufgerichteten Betonplatten zu bauen. Eine konventionelle Bauweise der Wände 7 aus einzelnen (Ziegel-) Steinen ist natürlich auch denkbar.

Die Wände 7 werden oben abgeschlossen durch eine vorzugsweise horizontale Decke 9, beispielsweise aus Beton.

Bei der unterirdischen Ausführungsform ist bevorzugt die Decke 9 mit einem Zugang versehen, beispielsweise mit einem Deckel 10, welcher eine Art Mannloch 11 verschließt.

Bei oberirdischen Ausführungsformen ist bevorzugt eine Zugangstür in einer Wand 7 vorgesehen.

Ein Zugang - also ein Deckel 10 oder eine Tür - kann mit einer rundum laufenden Dichtung versehen sein, welche dafür sorgt, dass die Kammer 5 in geschlossenem Zustand weitgehend luftdicht abgeschlossen ist. Ein Zugang ist entweder nicht verschließbar oder zumindest von innen stets zu öffnen.

An der Innenseite der Umhausung 6 ist eine Wärmeisolation vorgesehen in Form von thermisch isolierenden Platten 12, 13.

Es kann sich hierbei um verschiedene Materialien handeln, beispielsweise um ein geschäumtes Material wie Styropor oder Styrodur.

Bevorzugt ist der Boden mit einem plattenförmigen Material 12 aus Styrodur belegt, die Wände mit einem plattenförmigen Material 13 aus Styropor.

Andere Materialien sind denkbar, beispielsweise sogenannte Vakuumisolationspaneele, wobei ein geschäumter oder offenporiger Kern von einer luftdichten Umhüllung umschlossen und sodann evakuiert ist, so dass kein Wärmetransport infolge Konvektion auftreten kann.

Die Dicke der Isolationsplatten 12, 13 hängt in gewissem Umfang von dem Isolationsvermögen ab. Während bei konventionellen Isolationsplatten ohne Vakuum eine Stärke von 5 cm oder mehr zu empfehlen ist, vorzugsweise von 10 cm oder mehr, kann bei Vakuumisolationsplatten bereits eine Stärke von 1 cm oder mehr ausreichend sein, oder eine Stärke von 2 cm oder mehr.

Bevorzugt ist auch ein Deckel 9 oder eine Zugangstür an der Innenseite thermisch isoliert.

Auf der Oberseite der bodenseitigen Isolationsplatten 12 kann eine flüssigkeitsundurchlässige Lage 14 vorgesehen sein, beispielsweise in Form eines Blechs mit einem hochgebogenen Rand 15. Dies Lage 14 dient dazu, ggf. austretende Flüssigkeit einem tiefsten Punkt oder Sumpf 16 zuzuleiten und dort zu sammeln. Dort kann dann ein Flüssigkeitssensor 17 angeordnet sein, um im Fall einer Leckage einen Alarm auszuläsen.

Die Kammer 5 ist durch den Zugang - also ein Mannloch 11 mit Deckel oder eine Tür - begehbar.

Im Falle eines deckenseitigen Zugangs, wie in der Zeichnung dargestellt, ist unterhalb des Mannlochs 11 eine Leiter 18 vorgesehen, so dass Bedienungs- oder Wartungspersonal in die Kammer 5 hinab steigen kann. Bevorzugt ist die Leiter 18 allenfalls an ihren oberen und/oder unteren Holmenden verankert, um Wärmebrücken durch die Isolationsplatten 12, 13 hindurch zu minimieren.

Bevorzugt ist ein Mannloch 11 und die darunter verlaufende Leiter 18 nicht zentral in der Decke 9 angeordnet, sondern zur Peripherie der Kammer 5 hin verschoben, also zu einer Wand 7 hin.

Im Falle einer Zugangstür oder wenn das Betreten der Kammer 5 nicht erforderlich ist, ist eine Leiter 18 entbehrlich.

Daneben verbleibt innerhalb der Kammer 5 ein Raum für den Einbau eines Behälters 19, beispielsweise von der Gestalt eines Tanks. Der Behälter steht vorzugsweise frei innerhalb der Kammer 5 und ist unten durch Füße 20 oder ein sonstiges Gestell abgestützt, welche die bodenseitige Isolationsplatte 12 durchgreifen und auf dem festen Boden 8 oder Fundament 4 ruhen. Durchtrittsöffnungen durch eine flüssigkeitsdichte Lage 14 können abgedichtet sein.

Der horizontale Querschnitt des Behälters 19 kann dem Innenquerschnitt der Kammer 5 passend ausgewählt sein, beispielsweise bei einem viereckigen Kammerquerschnitt selbst rechteckig sein, natürlich ggf. mit abgerundeten Ecken. Andererseits ist dies nicht zwingend, und daher kann auch in eine Kammer 5 mit eckigem Querschnitt beispielsweise ein Behälter 19 mit rundem Querschnitt eingebaut werden.

Der Behälter 5 benötigt selbst keine Isolation und braucht daher nur aus einer einzigen Lage eines steifen Materials bestehen, beispielsweise aus Metallblech.

Ein Mantel 21 des vorzugsweise aufrecht stehenden Behälters 5 ist unten durch einen Boden 22 und oben durch eine Kappe oder Decke 23 verschlossen. Diese Teile können direkt oder über gebogene Übergangsbereiche 24 miteinander verschweißt oder auf sonstige Weise flüssigkeitsdicht miteinander verbunden sein.

In dem Behälter 19 befindet sich die zu speichernde Flüssigkeit 2. Für deren Zu- und Abtransport verfügt der Behälter 19 über eine Zulauföffnung 25 und über eine Ablauföffnung 26, woran außen jeweils ein Rohr anschließbar ist, ggf. direkt oder über eine oder mehrere zwischengeschaltete Armaturen wie Pumpen 27, Ventile 28, Absperrklappen, Durchflussmesser od. dgl.

Bei der in der Zeichnung wiederegebenen Vorrichtung 1 ist an der Zulauföffnung 25 ein Ventil 28, an der Ablauföffnung 26 eine Pumpe 27 angeschlossen.

Die Zulauföffnung 25 mündet vorzugsweise im Bereich der oberseitigen Decke 23 in den Behälter 19.

Sofern sich die Ablauföffnung 26 ebenfalls im Bereich der oberseitigen Decke 23 des Behälters 19 befindet, sollte im Inneren des Behälters 19 ein bis nahe dessen Boden 22 reichendes Ansaugrohr 29 vorgesehen sein, damit die Pumpe 27 erst trocken läuft, wenn der Behälter 19 weitgehend leer ist.

Des weiteren kann innerhalb des Behälters 19 ein Füllstandssensor 30 eingebaut sein, welcher entweder einen oder mehrere vorgegebene Füllstands-Grenzwerte überwacht oder den tatsächlichen Füllstand erfasst und als Messwert an eine Auswertung, Steuerung und/oder Regelung übermittelt. Darüber hinaus kann innerhalb des Behälters 19 ein Wärmetauscher 31 angeordnet sein, um die Flüssigkeit 2 innerhalb des Behälters 19 zu temperieren, also aufzuheizen oder abzukühlen.

Bevorzugt hat der Wärmetauscher 31 die Gestalt eines zu einer Wendel gebogenen Rohrs 32, welches um eine beispielsweise vertikale Wickelachse gebogen ist.

An den beiden Enden des Wärmetauschers 31 bzw. des wendelförmigen Rohrabschnittes 32 ist je ein Rohr 33, 34 angeschlossen, welches den Behälter 19 verlässt, vorzugsweise an dessen Oberseite 23. Durch die Vorlauftemperatur und/oder die Strömungsgeschwindigkeit des Temperierungsmediums innerhalb der Rohre 32, 33, 34 kann die Wärmezu- oder -abfuhr in den bzw. aus dem Behälter 19 gesteuert oder geregelt werden.

Für eine Regelung kann innerhalb des Behälters 19 ein Temperatursensor angeordnet sein, vorzugsweise in dessen unterem Bereich und/oder nahe der Öffnung eines Ansaugrohrs 29.

Ferner können weitere Sensoren vorgesehen sein. Beispielsweise kann in der Kammer 5 außerhalb des Behälters 19 ein Temperatursensor installiert sein, so dass auch der Raum in der Kammer 5, aber außerhalb des Behälters 19 temperiert oder zumindest überwacht werden kann.

Ferner könnte ein Drucksensor vorgesehen sein, damit insbesondere bei einem unter Druck stehenden Speicherbehälter 19 und abgedichtetem Zugang bzw. Mannloch 11 eine Leckage des Behälters 19 anhand eines Druckanstiegs innerhalb der Kammer 5 erkannt werden kann.

Außerdem könnten weitere Parameter durch zusätzliche Sensoren überwacht werden, beispielsweise die Entwicklung giftiger Dämpfe oder Gase, etc.

Schließlich ist innerhalb der Kammer 5 wenigstens eine vorzugsweise elektrische Lichtquelle 35 vorgesehen, die mittels eines Schalters 36 elektrisch aktivierbar ist, vorzugsweise durch einen außerhalb der Kammer 5 installierten Schalter 36.

**Bezugszeichenliste**

| | | | |
|---|---|---|---|
| 1 | Vorrichtung | 26 | Ablauföffnung |
| 2 | Flüssigkeit | 27 | Pumpe |
| 3 | Erdoberfläche | 28 | Ventil |
| 4 | Fundament | 29 | Ansaugrohr |
| 5 | Kammer | 30 | Füllstandssensor |
| 6 | Umhausung | 31 | Wärmetauscher |
| 7 | Wände | 32 | gewendelter Rohrabschnitt |
| 8 | Boden | 33 | Rohr |
| 9 | Decke | 34 | Rohr |
| 10 | Deckel | 35 | Lichtquelle |
| 11 | Mannloch | 36 | Schalter |
| 12 | Isolationsplatten | | |
| 13 | Isolationsplatten | | |
| 14 | Lage | | |
| 15 | Rand | | |
| 16 | Sumpf | | |
| 17 | Flüssigkeitssensor | | |
| 18 | Leiter | | |
| 19 | Behälter | | |
| 20 | Füße | | |
| 21 | Mantel | | |
| 22 | Boden | | |
| 23 | Decke | | |
| 24 | Übergangsbereich | | |
| 25 | Zulauföffnung | | |

## Patentansprüche

1. Thermo-Speicher-Vorrichtung (1) zum Speichern einer Flüssigkeit (2) bei einer von dem äußeren Temperaturniveau abweichenden Temperatur, umfassend eine Kammer (5), einen darin aufgestellten Behälter (19) und ein thermisches Isolationsmaterial, **dadurch gekennzeichnet, dass** der Behälter (19) unmittelbar an seiner Außenseite keine Isolation aufweist, sondern dass die Kammer (5) begehbar ist und an ihrer Innenseite mit einer plattenförmigen, thermischen Isolation (12,13) belegt ist, wobei die Kammer (5) so groß gewählt ist, dass sie auch bei eingebautem Behälter (19) noch begehbar ist, also außerhalb des eingebauten Behälters (19) noch genügend Platz für wenigstens eine Person aufweist, wobei der Behälter (19) wenigstens eine Zulauföffnung (25) zum Einleiten der Flüssigkeit aufweist sowie wenigstens eine Ablauföffnung (26) zur Entnahme der Flüssigkeit, und wobei sowohl an der Zulauföffnung (25) als auch an der Ablauföffnung (26) außen jeweils ein Rohr anschließbar ist, und wobei alle Innenseiten der Wände (7) der den Behälter (19) aufnehmenden Kammer (5) sowie die Innenseiten von deren Decke (9) und deren Boden (8) isoliert sind, d.h. mit isolierenden Platten (12,13) belegt.

2. Vorrichtung (1) nach einem der vorhergehenden Ansprüche, **dadurch gekennzeichnet, dass** die Innenwand der Kammer (5) mit ebenen Wänden (7), einer ebenen Decke (9) und/oder einem ebenen Boden (8) versehen ist.

3. Vorrichtung (1) nach einem der vorhergehenden Ansprüche, **dadurch gekennzeichnet, dass** das Isolationsmaterial (12,13) zumindest teilweise aus geschäumten Polystyrol besteht, beispielsweise aus expandiertem Polystyrol (EPS) wie Styropor oder aus extrudiertem Polystyrol (XPS) wie Styrodur, wobei ersteres bevorzugt an den Innenseiten der Wände (7) und an der Decke (9), letzteres bevorzugt am Boden (8) Verwendung findet.

4. Vorrichtung (1) nach einem der vorhergehenden Ansprüche, **dadurch gekennzeichnet, dass** das Isolationsmaterial (12, 13) zumindest teilweise aus Vakuumisolationskörpern besteht, wobei der eigentliche loslationskörper vollständig von einer luftdichten Hülle umgeben und evakuiert ist, so dass die Wärmeleitfähigkeit auf ein Minimum reduziert ist.

5. Vorrichtung (1) nach einem der vorhergehenden Ansprüche, **dadurch gekennzeichnet, dass** die Kammer (5) mit einem Zugang versehen ist, beispielsweise in Form einer Tür, eines Deckels und/oder eines Mannlochs (11).

6. Vorrichtung (1) nach einem der vorhergehenden Ansprüche, **dadurch gekennzeichnet, dass** die Kammer (5) unterirdisch angeordnet ist, beispielsweise in Form eines Kellerraums oder eines vollständig abgeschlossenen Kellerabteils, oder eines zisternenartigen Hohlraums unter der Erdoberfläche (3).

7. Vorrichtung (1) nach einem der vorhergehenden Ansprüche, **dadurch gekennzeichnet, dass** die Kammer (5) oberirdisch angeordnet ist, beispielsweise in Form eines Nebengebäudes oder einer Abstellkammer, vorzugsweise auf der Erdoberfläche (3), ggf. aber auch auf einem Dachboden od. dgl.

8. Vorrichtung (1) nach einem der vorhergehenden Ansprüche, **dadurch gekennzeichnet, dass** in der Kammer (5) eine Leiter (18) vorgesehen ist, damit eine Person in die Kammer (5) hinabsteigen kann.

9. Vorrichtung (1) nach einem der vorhergehenden Ansprüche, **dadurch gekennzeichnet, dass** die Kammer (5) mit einer künstlichen und/oder natürlichen Beleuchtung versehen ist, beispielsweise mit einer elektrischen Beleuchtung (35) und/oder mit einem Lichtschacht.

10. Vorrichtung (1) nach einem der vorhergehenden Ansprüche, **dadurch gekennzeichnet, dass** die gespeicherte oder zu speichernde Flüssigkeit (2) Wasser ist oder Wasser als Hauptbestandteil enthält, d.h., in einem Gewichtsanteil von 50 % oder mehr, beispielsweise in einem Gewichtsanteil von 70 % oder mehr, bevorzugt in einem Gewichtsanteil von 90 % oder mehr, vorzugsweise in einem Gewichtsanteil von 95 % oder mehr, insbesondere in einem Gewichtsanteil von 98 % oder mehr, oder gar in einem Gewichtsanteil von 99 % oder mehr.

11. Vorrichtung (1) nach einem der vorhergehenden Ansprüche, **gekennzeichnet durch** eine Heizeinrichtung, um die Temperatur der Flüssigkeit (2) innerhalb des Behälters (19) anzuheben.

12. Vorrichtung (1) nach einem der vorhergehenden Ansprüche, **gekennzeichnet durch** eine Kühleinrichtung, um die Temperatur der Flüssigkeit (2) innerhalb des Behälters (19) abzusenken.

13. Vorrichtung (1) nach Anspruch 11 oder 12, **dadurch gekennzeichnet, dass** die Heiz- und/oder Kühleinrichtung innerhalb der begehbaren Kammer (5) angeordnet ist, derart, dass sie von der an der Innenseite der Kammerwand (5-10) angeordneten, plattenförmigen, thermischen Isolation (12,13) umschlossen ist.

14. Vorrichtung (1) nach einem der Ansprüche 11 bis 13, **dadurch gekennzeichnet, dass** wenigstens eine Heiz- und/oder Kühleinrichtung Bestandteil eines Temperaturregelkreises ist, um die Temperatur der Flüssigkeit (2) innerhalb des Behälters (19) auf einen vorgegebenen Temperaturwert zu regeln oder innerhalb eines vorgegebenen Temperaturwertebereichs zu halten.

15. Vorrichtung (1) nach einem der Ansprüche 11 bis 14, **dadurch gekennzeichnet, dass** wenigstens eine Heiz- und/oder Kühleinrichtung Bestandteil eines Temperaturregelkreises ist, um die Temperatur der Luft oder der sonstigen Atmosphäre innerhalb der Kammer (5) auf einen vorgegebenen Temperaturwert zu regeln oder innerhalb eines vorgegebenen Temperaturwertebereichs zu halten.

16. Vorrichtung (1) nach einem der Ansprüche 11 bis 15, **dadurch gekennzeichnet, dass** wenigstens eine Heiz- und/oder Kühleinrichtung Bestandteil einer Wärmepumpe oder eines sonstigen Wärmekreislaufs ist, beispielsweise eines Solarkollektor-Wärmekreislaufs, um je nach Bedarf Wärme in die Kammer (5) und/oder in den Behälter (19) zu transportieren oder von dort abzuführen.

17. Vorrichtung (1) nach einem der vorhergehenden Ansprüche, **dadurch gekennzeichnet, dass** in dem begehbaren Raum der Kammer außerhalb des Behälters
a) ein Temperatursensor angeordnet ist, und/oder
b) ein Leckage-Sensor angeordnet ist, beispielsweise ein die innerhalb des Behälters gespeicherte Flüssigkeit detektierender Sensor (17), und/oder
c) ein Drucksensor angeordnet ist.

## Claims

1. Thermal storage device (1) for the storage of a liquid (2) at a temperature diferent from the environmental temperature level, comprising a chamber (5), a container (19) arranged therein as well as a thermal insulation material, **characterized in that** the container (19) does not exhibit any insulation directly on its outer surface, but instead the chamber (5) is accessible and is covered at its inner surface with a plate-shaped thermal insulation (12,13), wherein the size of the chamber (5) is designed large enough to be still walkable also when the container (19) is installed, thus so that outside of the built-in container (19) there is still enough room for at least one person, wherein the container (19) comprises at least one inlet opening (25) for pouring the liquid in, and at least one outlet opening (26) for releasing the liquid, and wherein a tube is connectable to each of the inlet opening (25) as well as the outlet opening (26), and wherein all inner sides of the walls (7) of the chamber (5) accommodating the container (19) as well as the inner sides of its ceiling (9) and/or its floor (8) are insulated, i.e. are covered with heat insulating plates (12,13).

2. Device (1) according to the preceding claim, **characterized in that** the inside wall surfaces of the chamber (5) are provided with plane walls (7), a plane ceiling (9) and/or a plane floor (8).

3. Device (1) according to one of the preceding claims, **characterized in that** the insulation material (12,13) at least to some extent consists of foamed polystyrene, for example of expanded polystyrene (EPS) like Styrofoam, or of extruded polystyrene (XPS) like Styrodur, wherein the former is preferably used at the inner sides of the walls (7) and at the ceiling (9) while the latter is preferably applied on the floor (8).

4. Device (1) according to one of the preceding claims, **characterized in that** the insulation material (12,13) at least to some extent consists of vacuum insulation panels, wherein the actual insulating solid is completely surrounded by an airtight envelope and evacuated so that thermal conductivity is reduced to a minimum.

5. Device (1) according to one of the preceding claims, **characterized in that** the chamber (5) is provided with an access entrance, for example in form of a door, a lid, and/or a manhole (11).

6. Device (1) according to one of the preceding claims, **characterized in that** the chamber (5) is placed belowground, for instance in form of a basement room or of a hermetically closed basement compartment, or in form of a cistern-like cavity under the ground surface (3).

7. Device (1) according to one of the preceding claims, **characterized in that** the chamber (5) is located aboveground, for example in form of an auxiliary building or inside a storeroom, preferably on the ground surface (3), also however inside an attic room or the like, as the case may be.

8. Device (1) according to one of the preceding claims, **characterized in that** a ladder (18) is provided inside the chamber (5) so that a person can step down inside the chamber (5).

9. Device (1) according to one of the preceding claims, **characterized in that** the chamber (5) is equipped with some kind of artificial and/or natural lighting, for example by electric lighting (35) and/or in form of a light well.

10. Device (1) according to one of the preceding claims, **characterized in that** the liquid (2) stored or to be stored is water, or contains water as its primary component, i.e. contains water at a weight proportion of 50 % or more, for example at a weight proportion of 70 % or more, preferably at a weight proportion of 90 % or more, in preference at a weight proportion of 95 % or more, in particular at a weight proportion of 98 % or more, or even at a weight proportion of 99 % or more.

11. Device (1) according to one of the preceding claims, **characterized by** a heating unit for raising the temperature of the liquid (2) stored inside the container (19).

12. Device (1) according to one of the preceding claims, **characterized by** a cooling unit for lowering the temperature of the liquid (2) stored inside the container (19).

13. Device (1) according to claim 11 or 12, **characterized in that** the heating unit and/or cooling unit is placed inside the walkable chamber (5) in such a way that it is enclosed by the plate-shaped thermal insulation (12,13) attached to the inner sides of the chamber walls (5-10).

14. Device (1) according to one of claims 11 to 13, **characterized in that** at least one heating unit and/or cooling unit is component part of a temperature control circuit in order to regulate the temperature of the liquid (2) inside the container (19) to a specified temperature value, or to keep it within a specified range of permissible temperature values.

15. Device (1) according to one of claims 11 to 14, **characterized in that** at least one heating and/or cooling unit is component part of a temperature control circuit in order to regulate the temperature of the air or some other kind of atmosphere inside the chamber (5) to a specified temperature value, or to keep it within a specified range of permissible temperature values.

16. Device (1) according to one of claims 11 to 15, **characterized in that** at least one heating and/or cooling unit is component part of a heat pump or another heat circulation system, for example of a solar collector heat circulation system for transporting thermal energy either into the chamber (5) and/or into the container (19), or for discharging the same from there.

17. Device (1) according to one of the preceding claims, **characterized in that** in the walkable room of the chamber outside of the container,
a) a temperature sensor is installed, and/or
b) a leakage sensor is installed, for example a sensor (17) detecting the liquid stored inside the container, and/or
c) a pressure sensor is installed.

## Revendications

1. Dispositif de stockage thermique (1) pour stocker un liquide (2) à une température différente du niveau de température extérieur, comportant une chambre (5), un contenant (19) installé dans ladite chambre et un isolant thermique, **caractérisé en ce que** le contenant (19) ne présente pas d'isolation directement sur sa face extérieure, mais que la chambre (5) est accessible et est pourvue d'une isolation thermique (12, 13) sous forme de panneaux sur sa face intérieure, **en ce que** la taille de la chambre (5) est sélectionnée de façon à ce qu'elle soit encore accessible même lorsqu'un contenant (19) est monté, c'est-à-dire qu'elle présente encore suffisamment de place pour au moins une personne en dehors du contenant (19) monté, **en ce que** le contenant (19) comporté au moins un orifice d'alimentation (25) pour l'introduction du liquide ainsi qu'au moins un orifice d'écoulement (26) pour la sortie du liquide, et **en ce que** respectivement un tuyau peut être raccordé à l'extérieur aussi bien à l'orifice d'alimentation (25) qu'à l'orifice d'écoulement (26), et **en ce que** toutes les faces intérieures des parois (7) de la chambre (5) recevant le contenant (19) ainsi que les faces intérieures sont isolées de leur plafond (9) et de leur plancher (8), c'est-à-dire qu'elles sont pourvues de panneaux isolants (12, 13).

2. Dispositif (1) selon l'une des revendications précédentes, **caractérisé en ce que** la paroi intérieure de la chambre (5) comporte des parois (7) planes, un plafond (9) plan et/ou un plancher (8) plan.

3. Dispositif (1) selon l'une des revendications précédentes, **caractérisé en ce que** l'isolant (12, 13) est constitué au moins partiellement d'un polystyrène alvéolaire, par exemple de polystyrène expansé (EPS) comme le polystyrène ou de polystyrène extrudé (XPS) comme le Styrodur, le premier étant utilisé de préférence sur les faces intérieures des parois (7) et au plafond (9), le dernier de préférence sur le plancher (8).

4. Dispositif (1) selon l'une des revendications précédentes, **caractérisé en ce que** l'isolant (12, 13) est constitué au moins partiellement de corps d'isolation sous vide, **en ce que** le corps d'isolation proprement dit est entouré entièrement par une enveloppe étanche à l'air et mis sous vide, de telle sorte que la conductivité thermique est réduite à un minimum.

5. Dispositif (1) selon l'une des revendications précédentes, **caractérisé en ce que** la chambre (5) est dotée d'un accès, par exemple sous forme de porte, de couvercle et/ou de trou d'homme (11).

6. Dispositif (1) selon l'une des revendications précédentes, **caractérisé en ce que** la chambre (5) est située sous terre, par exemple sous forme de cave ou de compartiment de cave entièrement fermé, ou de cavité de type citerne sous la surface du sol (3).

7. Dispositif (1) selon l'une des revendications précédentes, **caractérisé en ce que** la chambre (5) est disposée en surface, sous forme d'annexe ou de remise, de préférence au niveau du sol (3), mais aussi le cas échéant dans un grenier ou similaire.

8. Dispositif (1) selon l'une des revendications précédentes, **caractérisé en ce qu'**une échelle (18) est prévue dans la chambre (5) pour qu'une personne puisse descendre dans la chambre (5).

9. Dispositif (1) selon l'une des revendications précédentes, **caractérisé en ce que** la chambre (5) est dotée d'un éclairage artificiel et/ou naturel, par exemple d'un éclairage électrique (35) et/ou d'un puits de lumière.

10. Dispositif (1) selon l'une des revendications précédentes, **caractérisé en ce que** le liquide (2) stocké ou à stocker est de l'eau ou contient de l'eau comme élément principal, c'est-à-dire 50 % en poids ou plus, par exemple 70 % en poids ou plus, avantageusement 90 % en poids ou plus, de préférence 95 % en poids ou plus, en particulier 98 % en poids ou plus, voire 99 % en poids ou plus.

11. Dispositif (1) selon l'une des revendications précédentes, **caractérisé par** un système de chauffage pour augmenter la température du liquide (2) à l'intérieur du contenant (19).

12. Dispositif (1) selon l'une des revendications précédentes, **caractérisé par** un système de refroidissement pour abaisser la température du liquide (2) à l'intérieur du contenant (19).

13. Dispositif (1) selon la revendication 11 ou 12, **caractérisé en ce que** le système de chauffage et/ou de refroidissement est disposé à l'intérieur de la chambre (5) accessible, de sorte qu'il est entouré par l'isolation thermique (12, 13), sous forme de panneaux, disposée sur la face intérieure de la paroi de chambre (5-10).

14. Dispositif (1) selon l'une des revendications 11 à 13, **caractérisé en ce qu'**au moins un système de chauffage et/ou de refroidissement est un élément d'un circuit de régulation de température pour régler la température du liquide (2) à l'intérieur du contenant (19) à une valeur de température prédéfinie ou la maintenir à l'intérieur d'une plage de valeurs de température.

15. Dispositif (1) selon l'une des revendications 11 à 14, **caractérisé en ce qu'**au moins un système de chauffage et/ou de refroidissement est un élément d'un circuit de régulation de température pour régler la température de l'air ou d'une autre atmosphère à l'intérieur de la chambre (5) à une valeur de température prédéfinie ou de la maintenir à l'intérieur d'une plage de valeurs de température prédéfinie.

16. Dispositif (1) selon l'une de revendications 11 à 15, **caractérisé en ce qu'**au moins un système de chauffage et/ou de refroidissement est un élément d'une pompe à chaleur ou d'un autre circuit thermique, par exemple d'un circuit thermique de capteur solaire pour transporter de la chaleur dans la chambre (5) et/ou dans le contenant (19) ou pour évacuer de la chaleur de ladite chambre et/ou dudit contenant en fonction des besoins.

17. Dispositif (1) selon l'une des revendications précédentes, **caractérisé en ce que** dans l'espace accessible de la chambre en dehors du contenant
a) est monté un capteur de température, et/ou
b) est monté un capteur de fuite, par exemple un capteur (17) détectant le liquide stocké à l'intérieur du contenant et/ou
c) est monté un capteur de pression.
